# EUROPEAN PATENT SPECIFICATION

(11) **EP 1 992 305 B1**
(45) Date of publication and mention of the grant of the patent: **10.08.2011**
(21) Application number: 08008686.1
(22) Date of filing: 08.05.2008
(51) Int. Cl.: A61C 8/00

(54) **Housing container for dental implant**
Behälter für zahnärztliches Implantat
Récipient pour implant dentaire

(30) Priority: 17.05.2007 JP 2007131656
(43) Date of publication of application: 19.11.2008
(73) Proprietor: GC Corporation, Itabashi-ku Tokyo 174-8585 (JP)
(72) Inventor: Takahashi, Masashi, Tokyo 174-8585 (JP); Hanada, Shinichiro, Tokyo 174-8585 (JP); Suzuki, Yasuhiro, Tokyo 174-8585 (JP)
(74) Representative: Müller-Boré & Partner Patentanwälte

(56) References cited:
- EP-A- 1 252 866
- WO-A-00/02496
- WO-A-98/44863
- US-A- 4 671 410
- US-A- 5 755 575
- US-A- 6 068 480
- US-B1- 6 464 500

## Description

The present invention relates to a housing container for a fixture capable of accurately and easily positioning and fixing a housed fixture for a dental implant, and preventing to damage the fixture by greatly moving in the housing container for a fixture when carrying it.

A fixture for a dental implant is required to be sanitary because of being implanted into a jawbone. Therefore, a fixture is housed in a housing container for a fixture having high sealing property in order to keep the sterilized state and provided.

As for such a housing container for a fixture, a housing main body is formed with the same material as that of the fixture or glass so that impurities are not adhered to the fixture.

However, in the housing container for a fixture, the fixture is housed in the state of a part thereof contacting with an inner face of the housing main body. Thus, if the fixture greatly moves in the housing container for a fixture when being carried, the fixture may be damaged by mutual contact.

In order to solve this problem, Japanese Translation of PCT Publication No. 2000-512194 discloses a housing container for a fixture, which houses the fixture in a manner of hanging it by previously engaging an end part at the oral cavity inner side of a fixture with a holding part (a fixture mount) and holding the fixture mount at an upper part in the housing container. In this housing container, a fixture is hung so as not to contact an outer face of the fixture to the inside of the housing container, and thus the fixture is hardly damaged when being carried. However, this housing container for a fixture needs many parts to hang the fixture, and the fixture mount must be removed after an operation. Thus, it takes much time and work.

US-B1-6 464 500 discloses a dental implant anchor which includes an external body surface that can have threads or be non-threaded and a uniquely designed internal portion for engaging screws, abutments, and insertion tools in one step. The internal portion comprises three sections: a top section including a collar, a middle section including threads, and a bottom section including a surface designed to engage a wrench, such as a hex wrench. The collar, which has an O-ring groove, holds an implant during insertion and stabilizes abutment. The extended surface allows the insertion tool to screw and unscrew the implant with a doctor's hand piece.

WO 00/02496 A discloses a carrier for a dental implant package to releasably hold a dental implant and to cap a packaging vial. The carrier includes a plurality of vial-engaging flexible fingers and a plurality of screw-engaging flexible fingers. The vial-engaging fingers engage a groove of the packaging vial to form a releasable mechanical lock. For cylindrical implants, the screw-engaging fingers grip a healing screw coupled to the cylindrical implant. The cylindrical implant carrier also includes a protrusion in the center to stabilize the cylindrical implant during transportation. For threaded implants, the screw-engaging fingers releasably engage a groove of an insertion tool screw coupled to the threaded implant.

US-A-5 755 575 discloses a packaging system for dental implants and a method for implanting a packaged implant. The packaging system includes a vial and a vial cap forming an enclosure for an implant and driver cap. The driver cap is press fit to both the implant and vial cap and engages the implant to impart driving forces thereto. Once the implant is driven to into position, the driver cap serves as a conventional healing screw to cover the implant.

The present invention solves the above-described problems, and an objective of the present invention is to provide a housing container for a fixture capable of accurately and easily positioning and fixing a housed fixture for a dental implant, and preventing to damage the fixture by greatly moving in the housing container for a fixture when carrying it.

The problem is solved by a housing container for a fixture having the features of claim 1.

Present inventors carried out earnest works to solve the above-described problems and, as a result of this, they found out the followings to complete the present invention. A housing container for a fixture is made to have a housing main body made of titanium, a titanium alloy or a glass to house a fixture for a dental implant, and a cap made of a resin. The fixture has an engaging hole for an abutment at the oral cavity inner side of a hole which is bored along a center axis, has a closed end at the opposite side to an oral cavity inner side, and is provided with a female screw part. The engaging hole for an abutment has a larger cross section than a cross section of the female screw part. The cap has a stopper part formed at a predetermined position of an inner peripheral face, and this stopper part is fitted to an outer peripheral part at the fixture insert port side of the housing main body so as to contact with an upper face at the fixture insert port side of the housing main body. The cap has a rod, which is made of titanium or a titanium alloy and fixed to the inner side of the cap. This rod is inserted into the engaging hole for an abutment of the fixture, and/or is contacted with an upper face of the fixture so as not to greatly move the fixture in the housing main body. Owing to the above structure; the fixture can be accurately positioned and fixed without impurities being adhered to the fixture by the rod made of the same material as that of the fixture. Further, since the rod is fixed to the inner side of the cap, the fixture can be easily positioned and fixed by only fitting the cap to the housing main body. Further, since the cap is only fitted to the housing main body without being screwed, the cap can be easily attached and detached. Furthermore, when the cap is fitted, the cap cannot move further toward the housing main body side after the stopper part is in contact with an upper face at the fixture insert port side of the housing main body, and thus the rod does not excessively press the fixture. Therefore, the fixture is not damaged by the rod.

Further, the rod is inserted into the engaging hole for an abutment of the fixture, when a portion inserted into the engaging hole for an abutment is made to be in a round rod shape having a slightly smaller radius than the distance from a center axis of the fixture to an inner face of the engaging hole for an abutment, the rod can be easily inserted because of no directionality when the rod is inserted into the engaging hole for an abutment, and the rod can be easily formed because of being only in a round rod shape, so that it is preferable.

That is, an aspect of the present invention is a housing container for a fixture including a housing main body made of titanium, a titanium alloy or a glass to house a fixture for a dental implant, and a cap made of a resin. The fixture has an engaging hole for an abutment at the oral cavity inner side of a hole which is bored along a center axis, has a closed end at the opposite side to an oral cavity inner side, and is provided with the female screw part. The engaging hole for an abutment has a larger cross section than a cross section of the female screw part. The cap has a stopper part formed at a predetermined position of an inner peripheral face. This stopper part is fitted to an outer peripheral part at the fixture insert port side of the housing main body so as to contact with an upper face at the fixture insert port side of the housing main body. The cap has a rod which is made of titanium or a titanium alloy and fixed to the inner side of the cap. This rod is inserted into the engaging hole for an abutment of the fixture, and/or is contacted with an upper face of the fixture so as not to greatly move the fixture in the housing main body.

A housing container for a fixture according to the present invention includes a housing main body made of titanium, a titanium alloy or a glass to house a fixture for a dental implant, and a cap made of a resin. The fixture has an engaging hole for an abutment at the oral cavity inner side of a hole, which is bored along a center axis, has a closed end at the opposite side to an oral cavity inner side, and is provided with a female screw part. The engaging hole for an abutment has a larger cross section than a cross section of the female screw part. The cap has a stopper part formed at a predetermined position of an inner peripheral face. This stopper part is fitted to an outer peripheral part at the fixture insert port side of the housing main body so as to contact with an upper face at the fixture insert port side of the housing main body. The cap has a rod which is made of titanium or a titanium alloy and fixed to the inner side of the cap. This rod is inserted into the engaging hole for an abutment of the fixture and/or is contacted with an upper face of the fixture so as not to greatly move the fixture in the housing main body. Thus, since the housing main body is made of the same material as that of the fixture or glass, impurities are hardly adhered to the fixture. Further, after opening the container, the fixture is in the state of being embedded in the housing main body so that an outer face of the fixture is not exposed. Thus, the sterilized state can be kept just before carrying out a dental implant operation. Further, when the rod is inserted into the engaging hole for an abutment and/or contacted with the upper face of the fixture, the fixture can be accurately positioned and fixed without impurities being adhered to the fixture since the rod is made of the same material as that of the fixture, where the engaging hole has a larger cross section than a transverse cross section of the female screw part of the fixture housed in the housing main body. Further, since the rod is fixed to the inner side of the cap, the fixture can be easily positioned and fixed by only fitting the cap to the housing main body. Further, since the cap is only fitted to the housing main body without being screwed, the cap can be easily attached and detached. Furthermore, when the cap is fitted, the cap cannot move further toward the housing main body side after the stopper part is in contact with an upper face at the fixture insert port side of the housing main body, and thus the rod does not excessively press the fixture. Therefore, the fixture is not damaged by the rod.

Further, the rod is inserted into the engaging hole for an abutment of the fixture, a portion inserted into the engaging hole for an abutment is made to be in a round rod shape having a slightly smaller radius than the distance from a center axis of the fixture to an inner face of the engaging hole for an abutment. In such an embodiment, when the engaging hole for an abutment of the fixture has a round-shaped cross section and has engaging concave grooves at approximately equal intervals around the circumference thereof, an outer face of the rod is positioned closing to an inner face of the circular shape of the engaging hole for an abutment and thus the fixture can be accurately positioned and fixed. Further, even when the cross section of the engaging hole for an abutment of the fixture is formed in a right polygon, at least a part of the outer face of the rod is positioned closing to plural parts of the inner face of the right polygon of the engaging hole for an abutment of the fixture, and thus the fixture can be accurately positioned and fixed by the rod. Furthermore, by making it in the round rod shape, the rod can be easily inserted because of no directionality when the rod is inserted into the engaging hole for an abutment, and the rod can be easily formed because of being only in a round rod shape, so that it is preferable.
Fig. 1 is a perspective view to illustrate one example of a housing container for a fixture according to the present invention.
Fig. 2 is an explanatory sectional view to illustrate mainparts when a fixture is housed in the housing container for a fixture according to the present invention in Fig. 1, where an engaging hole for an abutment of the fixture has a round-shaped cross section and has engaging concave grooves at approximately equal intervals around the circumference thereof.
Fig. 3 is a perspective view to illustrate a state that a cap is removed from the housing container for a fixture in Fig. 2.
Fig. 4 is a plan view of Fig. 3.
Fig. 5 is an explanatory sectional view to illustrate main parts of another example of a housing container for a fixture according to the present invention which houses a fixture having an engaging hole for an abutment having a right hexagonal cross section.
Fig. 6 is a perspective view to illustrate a state that a cap is removed from the housing container for a fixture in Fig. 5.
Fig. 7 is a plan view of Fig. 6.
Fig. 8 is a front view of an implanting instrument to take out a fixture housed in the housing container for a fixture according to the present invention in Fig. 2.

A housing container for a fixture according to the present invention will be described in detail below with referent to the drawings.

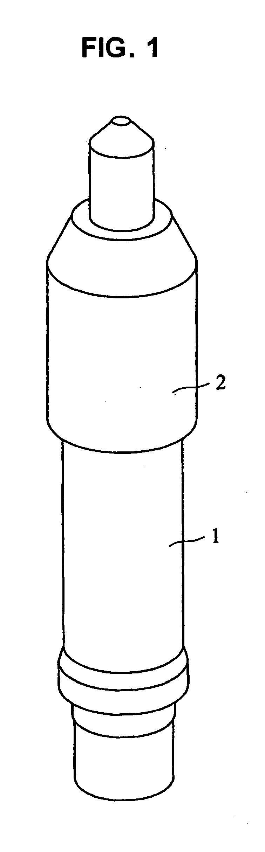

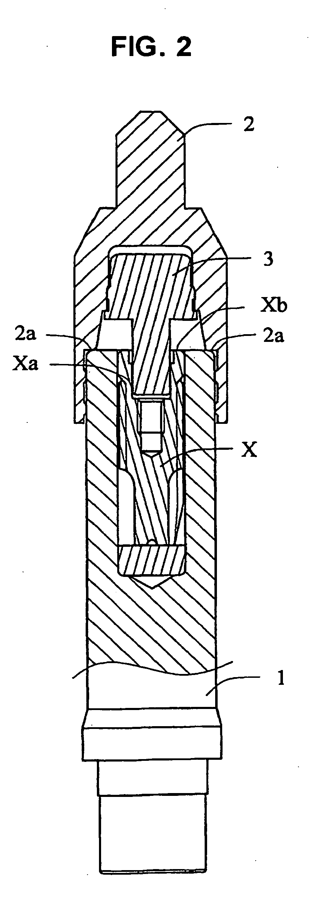

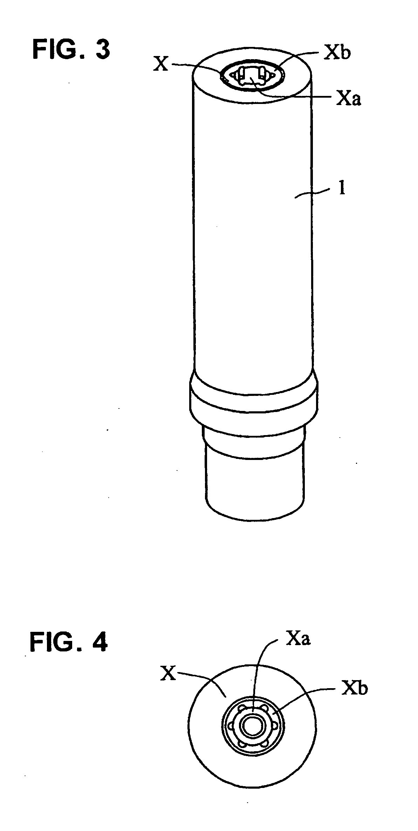

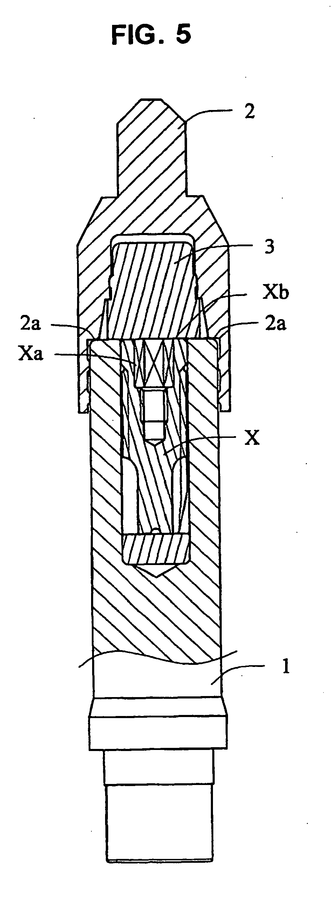

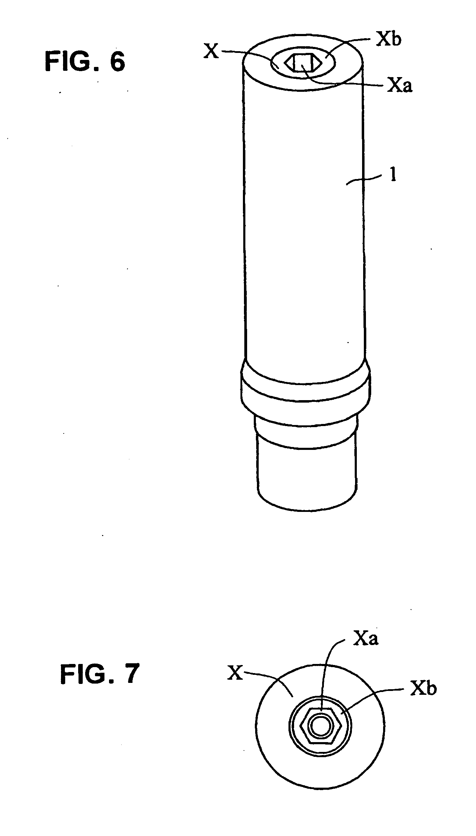

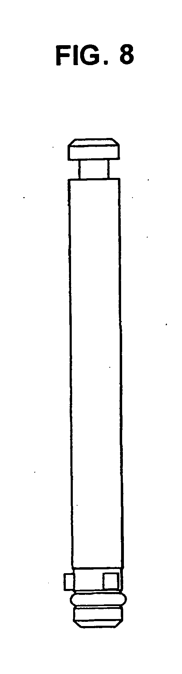

Fig. 1 is a perspective view to illustrate one example of a housing container for a fixture according to the present invention. Fig. 2 is an explanatory sectional view to illustrate main parts when a fixture is housed in the housing container for a fixture according to the present invention in Fig. 1, where an engaging hole for an abutment of the fixture has a round-shaped cross section and has engaging concave grooves at approximately equal intervals around the circumference thereof. Fig. 3 is a perspective view to illustrate a state that a cap is removed from the housing container for a fixture in Fig. 2. Fig. 4 is a plan view of Fig. 3. Fig. 5 is an explanatory sectional view to illustrate main parts of another example of a housing container for a fixture according to the present invention which houses a fixture having an engaging hole for an abutment having a cross section of a right hexagon. Fig. 6 is a perspective view to illustrate a state that a cap is removed from the housing container for a fixture in Fig.5. Fig. 7 is a plan view of Fig. 6. Fig. 8 is a front view of an implanting instrument to take out a fixture housed in the housing container for a fixture according to the present invention in Fig. 2.

In the drawings, a fixture X for a dental implant has an engaging hole Xa for an abutment at the oral cavity inner side of a hole which is bored along a center axis, has a closed end at the opposite side of the oral cavity inner side, and provided with a female screw part. The engaging hole Xa for an abutment has a larger cross section than a cross section of the female screw part. The engaging hole Xa for an abutment in an embodiment has a round-shaped cross section, and has engaging concave grooves at approximately equal intervals around the circumference thereof, as illustrate in Figs. 2 to 4. Further, in another embodiment, the engaging hole Xa for an abutment has a cross section formed in a right polygon such as a right hexagon as illustrated in Figs. 5 to 7.

The fixture X is taken out from a housing body 1 by using an instrument such as a take-out jig after opening a housing container for a fixture according to the present invention.

A housing main body 1 made of titanium, a titanium alloy, or glass houses the fixture X for a dental implant. The fixture X is housed in the housing main body 1 in the state of being embedded therein, so that an outer face of the fixture X is not exposed. Thus, the fixture X can keep the sterilized state until just before carrying out a dental implant operation.

A cap 2 made of a resin is fitted to an outer peripheral part at the fixture insert port side of the housing main body 1 in the state that a stopper part 2a contacts with an upper face at the fixture insert port side of the housing main body 1, where the stopper part 2a is formed at a predetermined position of an inner peripheral face, and preferably formed along the whole periphery of the predetermined position of an inner peripheral face. When the cap 2 is fitted to the outer peripheral part at the fixture insert port side of the housing main body 1, the cap 2 positions and fixes the fixture X through a rod 3 mentioned below, and keeps the sterilized state in the housing main body 1. Since the cap 2 does not directly contact with the fixture X, it can be prevented that different materials are adhered to the fixture X as impurities by contacting of the resin cap 2.

A rod 3 made of titanium or a titanium alloy is inserted into the engaging hole Xa for an abutment of the fixture X as illustrated in Fig. 2, is contacted with an upper face Xb of the fixture X as illustrated in Fig. 5, or is contacted with the upper face Xb of the fixture X while being inserted into the engaging hole Xa for an abutment of the fixture X (this state is not illustrated in the drawings). Thus, the fixture X is prevented to greatly move in the housing main body 1. This rod 3 is fixed to the inner side of the cap 2.

Further, in an embodiment that the rod 3 is inserted into the engaging hole Xa for an abutment of the fixture X, when a portion inserted into the engaging hole Xa for an abutment is made to be in a round rod shape having a slightly smaller radius than the distance from a center axis of the fixture X to an inner face of the engaging hole Xa for an abutment, the rod 3 can be easily inserted because of no directionality when the rod 3 is inserted into the engaging hole Xa for an abutment, and the rod 3 can be easily formed because of being only in a round rod shape, so that it is preferable.

In the housing container for a fixture according to the present invention, the cap 2 is only fitted to the housing main body 1. However, when an outer diameter at the upper end side of the housing main body 1 is made to have an approximately equal size to an inner diameter at the lower end side of the cap 2 to be fitted to the housing main body 1, the cap 2 is fitted to the housing body 1 in the state of the inner diameter thereof being expanded because the resin cap 2 can be slightly expanded and contracted, and thus a sufficiently fitting state can be easily made. Further, when the cap 2 has peripheral grooves at a portion directly contacting to the housing main body 1 as illustrated in Fig. 2, the portion of the cap 2 directly contacting to the housing main body 1 can be comparatively freely deformed because of having the peripheral grooves. Thus, the cap 2 can easily keep an approximately close contacting state with the housing main body 1.

In order to fix the rod 3 to the cap 2, the rod 3 is inserted into the cap 2 and adhered. However, when the rod 3 and the cap 2 are hardly adhered because of being different materials, for example, several stepped parts are formed at the rod 3, and the rod 3 can be pressed and fitted into the cap 3, as illustrated in Figs. 2 and 5.

Further, in an embodiment that the rod 3 is inserted into the engaging hole Xa for an abutment of the fixture X, when the rod 3 is too short and thus a large space is formed between the rod 3 and the upper face of the female screw part of the fixture X, the fixture X largely moves in an axial direction thereof when conveying it, and thus the fixture X may be damaged. Thus, a lower end of the rod 3 should be positioned close to a bottom face of the engaging hole Xa for an abutment. However, in order not to damage the fixture X by strongly pressing the female screw part of the fixture X with the lower end of rod 3, it is preferable to form the rod 3 having a length to form a slight space between the lower end of the rod 3 and the upper face of the female screw part of the fixture X when the stopper part 2a formed at the inner side of the cap 2 contacts to the upper face at the fixture insert port side of the housing main body 1, as illustrated in Figs. 2 and 5.

Further, the rod 3 is inserted into the engaging hole Xa for an abutment which is bored at the fixture X, or is contacted with the upper face Xb of the fixture X. Thus, a take-off jig such as a fixture mount cannot be previously mounted at the engaging hole Xa for an abutment bored at the fixture X. Therefore, in order to take out the fixture X from the housing container for a fixture according to the present invention, a separate take-out jig is needed. For example, when a cross section of the engaging hole Xa for an abutment of the fixture X is formed to be a right polygon, the fixture X can be taken out by using a take-out jig, which has a cross section having an approximately similar shape to the cross section of the engaging hole Xa but being slightly smaller than that and has an elastic material, such as a rubber, fitted on an outer face thereof. Further, when the engaging hole Xa for an abutment has a round-shaped cross section and has engaging concave grooves at approximately equal intervals around the circumference thereof, the fixture X can be taken out by using a take-out jig, which has a cross section in a round shape slightly smaller than that of the engaging hole Xa for an abutment and has an elastic material, such as a rubber, fitted on an outer face thereof.

As for another take-out jig, for example, an implanting instrument as illustrated in Fig. 8 can be used when the engaging hole Xa for an abutment of the fixture X has a round-shaped cross section and has engaging concave grooves at equal intervals around the circumference thereof. This implanting instrument has a round-shaped cross section slightly smaller than that of the engaging hole Xa for an abutment, and has a portion having an elastic material, such as a rubber, fitted on an outer face thereof and a projection parts on the outer face thereof to be engaged with the engaging concave grooves.

## Claims

1. A housing container for a fixture comprising a housing main body (1) made of titanium, a titanium alloy, or a glass to house a fixture (X) for a dental implant and a cap (2) made of a resin,
wherein the fixture (X) has an engaging hole (Xa) for an abutment at the oral cavity inner side of a hole which is bored along a center axis, has a closed end at the opposite side to an oral cavity inner side, and is provided with a female screw part,
the engaging hole (Xa) for an abutment has a larger cross section than a cross section of the female screw part, the cap (2) has a stopper part (2a) formed at a predetermined position of an inner peripheral face,
the stopper part (2a) is adapted to be fitted to an outer peripheral part at the fixture insert port side of the housing main body (1) so as to contact with an upper face at the fixture insert port side of the housing main body (1),
the cap (2) has a rod (3) made of titanium or a titanium alloy and fixed to the inner side of the cap (2), and the rod (3) is adapted to be inserted into the engaging hole (Xa) for an abutment of the fixture (X) so that the fixture (X) does not greatly move in the housing main body (1),
wherein the portion of the rod adapted to be inserted into the engaging hole (Xa) for an abutment is made to be in a round rod shape having a slightly smaller radius than a distance from a center axis of the fixture (X) to an inner face of the engaging hole (Xa) for an abutment.

## Patentansprüche

1. Gehäuse- bzw. Aufnahmebehälter für eine Halterung, umfassend einen Gehäuse- bzw. Aufnahmehauptkörper (1) aus Titan, einer Titanlegierung oder einem Glas, um eine Halterung (X) für ein Dentalimplantat aufzunehmen, und eine Kappe (2) aus Harz,
wobei die Halterung (X) ein Eingriffsloch (Xa) für eine Anlage an der Mundhöhleninnenseite eines Lochs aufweist, das entlang einer Mittelachse gebohrt wird, ein geschlossenes Ende an der gegenüberliegenden bzw. entgegengesetzten Seite einer Mundhöhleninnenseite aufweist und mit einem Hohlschrauben- bzw. Schraubenmutterteil bzw. Schraubenteil mit Innengewinde versehen ist,
das Eingriffsloch (Xa) für eine Anlage einen größeren Querschnitt aufweist als ein Querschnitt des Schraubenmutterteils,
die Kappe (2) einen Stopper- bzw. Anschlagteil (2a) aufweist, der an einer vorbestimmten Position einer Innenumfangsfläche gebildet ist,
der Stopperteil (2a) angepasst ist, an einen Außenumfangsteil an der Halterungseinsetzöffnungs- bzw. -portseite des Gehäusehauptkörpers (1) gepasst zu sein, um eine obere Fläche an der Halterungseinsetzöffnungsseite des Gehäusehauptkörpers (1) zu kontaktieren,
die Kappe (2) eine Stange (3) aus Titan oder einer Titanlegierung aufweist, die an der Innenseite der Kappe (2) fixiert bzw. befestigt ist, und wobei die Stange (3) angepasst ist, in das Eingriffsloch (Xa) für eine Anlage der Halterung (X) eingesetzt zu werden, so dass sich die Halterung (X) nicht stark in dem Gehäusehauptkörper (1) bewegt,
wobei der Abschnitt der Stange, der angepasst ist, in das Eingriffsloch (Xa) für eine Anlage eingesetzt zu werden, so gemacht ist, dass er eine runde Stangenform aufweist, die einen etwas kleinere Radius aufweist als ein Abstand von einer Mittelachse der Halterung (X) zu einer Innenfläche des Eingriffslochs (Xa) für eine Anlage.

## Revendications

1. Un récipient pour une pièce de maintien, comprenant un corps principal de récipient (1) en titane, en alliage de titane, ou en verre destiné à recevoir une pièce de maintien (X) pour un implant dentaire et un capuchon (2) en résine,
dans lequel la pièce de maintien (X) présente un trou d'insertion (Xa) pour un aboutement du côté l'intérieur de la cavité buccale d'un trou qui est foré le long d'un axe central, présente une extrémité fermée du côté opposé à un côté intérieur de la cavité buccale, et est dotée d'une partie vis femelle,
le trou d'insertion (Xa) pour un aboutement a une section transversale plus grande qu'une section transversale de la partie vis femelle,
le capuchon (2) est pourvu d'une partie d'arrêt (2a) formée à une position prédéterminée d'une face périphérique intérieure,
la partie d'arrêt (2a) est adaptée pour être montée sur une partie périphérique extérieure du côté port d'insertion de la pièce de maintien du corps principal du récipient (1) de manière à entrer en contact avec la face supérieure du côté port d'insertion de la pièce de maintien du corps principal du récipient (1),
le capuchon (2) possède une tige (3) en titane ou en alliage de titane fixée au côté interne du capuchon (2), et la tige (3) est adaptée pour être insérée dans le trou d'insertion (Xa) pour un aboutement de la pièce de maintien (X) de manière à ce que la pièce de maintien (X) ne bouge pas substantiellement dans le corps principal du récipient (1),
dans lequel la portion de la tige adaptée pour être insérée dans le trou d'insertion (Xa) pour un aboutement a la forme d'une tige ronde ayant un rayon légèrement plus petit que la distance d'un axe central de la pièce de maintien (X) à une face intérieure du trou d'insertion (Xa) pour un aboutement.
